# EUROPEAN PATENT APPLICATION

(11) **EP 4 461 117 A1**
(43) Date of publication of application: **13.11.2024**
(21) Application number: 23762889.6
(22) Date of filing: 28.02.2023
(51) Int. Cl.: A01D 34/74

(54) **LIFTING/LOWERING DEVICE AND HARVESTER**

(30) Priority: 02.03.2022 CN 202220456767 U; 02.03.2022 CN 202210205427; 02.03.2022 CN 202210204592; 02.03.2022 CN 202220454778 U
(71) Applicant: Shenzhen Mammotion Innovation Co., Limited, Shenzhen, Guangdong 518000 (CN)
(72) Inventor: XU, Yuanjun, Shenzhen, Guangdong 518000 (CN); CHEN, Shaojie, Shenzhen, Guangdong 518000 (CN); LI, Yongqing, Shenzhen, Guangdong 518000 (CN); ZHENG, Wei, Shenzhen, Guangdong 518000 (CN)
(74) Representative: RGTH
(86) International application number: PCT/CN2023/078876
(87) International publication number: WO 2023/165490

(57) **Abstract**

The present application provides a lifting/lowering device (1) and a harvester (1000). The lifting/lowering device (1) comprises a driving member (20), a transmission mechanism (30), a mounting mechanism (40), and a measuring mechanism (50). The transmission mechanism (30) comprises a first transmission member (31) and a second transmission member (32). The first transmission member (31) is connected to the second transmission member (32) and the driving member (20) respectively. The first transmission member (31) is driven by the driving member (20) to drive the second transmission member (32) to rotate. The mounting mechanism (40) is threadedly connected to the second transmission member (32), and the mounting mechanism (40) is configured to mount a cutter head mechanism (2). When the second transmission member (32) rotates, the mounting mechanism (40) moves towards or away from the first transmission member (31). The measuring mechanism is configured to measure a movement distance of the mounting mechanism (40), so as to accurately determine a height of the cutter head mechanism (2).

## Description

### Technical Field

The present application relates to a harvester, and in particular, to a lifting/lowering device and a harvester.

### Background Art

With the increasing variety of harvesters, there are more and more types of lifting/lowering devices in harvesters. A cutter head mechanism is lifted/lowered mainly by a lifting/lowering device. How to determine a height to which the cutter head mechanism is lifted/lowered has become a technical problem to be solved.

### Summary of the Invention

An objective of the present application is to provide a lifting/lowering device and a harvester to solve the technical problem of how to determine a height to which a cutter head mechanism is lifted/lowered.

In a first aspect, the present application provides a lifting/lowering device, comprising:
a driving member;
a transmission mechanism, comprising a first transmission member and a second transmission member, wherein the first transmission member is connected to the second transmission member and the driving member respectively, and the first transmission member is driven by the driving member to drive the second transmission member to rotate;
a mounting mechanism threadedly connected to the second transmission member, wherein the mounting mechanism is configured to mount a cutter head mechanism, and when the second transmission member rotates, the mounting mechanism moves towards or away from the first transmission member; and
a measuring mechanism configured to measure a movement distance of the mounting mechanism, so as to obtain a height of the cutter head mechanism.

With reference to the first aspect, in some implementations of the first aspect, the measuring mechanism further comprises an encoder and a magnetic body, wherein the magnetic body is arranged on the second transmission member and rotates together with the second transmission member when the second transmission member rotates, and the encoder is configured to calculate the movement distance of the mounting mechanism based on a number of rotations of the magnetic body.

With reference to the first aspect, in some implementations of the first aspect, the lifting/lowering device further comprises a controller electrically connected to the encoder and the driving member respectively and configured to control activation and deactivation of the encoder and the driving member.

With reference to the first aspect, in some implementations of the first aspect, the driving member is a driving motor comprising a power output shaft, and the first transmission member comprises a first sub-transmission member and a second sub-transmission member that mesh with each other; the first sub-transmission member is mounted on the power output shaft, and the second sub-transmission member is configured to mount the second transmission member; and when the driving motor is activated, the first sub-transmission member is driven by the power output shaft to rotate, the first sub-transmission member drives the second sub-transmission member to rotate, the second sub-transmission member drives the second transmission member to rotate, and the second transmission member drives the mounting mechanism to move towards or away from the second sub-transmission member.

With reference to the first aspect, in some implementations of the first aspect, the first sub-transmission member is a first gear fitted over the power output shaft, the second sub-transmission member is a second gear, the second transmission member is a lead screw on which the second gear is sleeved, and the mounting mechanism has an internal thread, is fitted over the lead screw and is threadedly connected to the lead screw; and when the driving motor is activated, the first gear is driven by the power output shaft to rotate, the first gear drives the second gear to rotate, the second gear drives the lead screw to rotate coaxially, and the lead screw drives the mounting mechanism to move towards or away from the second gear.

With reference to the first aspect, in some implementations of the first aspect, the mounting mechanism comprises an adjusting member, a nut, and a mounting member, wherein the nut is mounted on the adjusting member and is threadedly connected to the second transmission member, and the mounting member is configured to mount the cutter head mechanism and is arranged on the adjusting member.

With reference to the first aspect, in some implementations of the first aspect, the measuring mechanism is configured to measure a movement distance of the adjusting member.

With reference to the first aspect, in some implementations of the first aspect, the mounting member is fixedly arranged on the adjusting member.

With reference to the first aspect, in some implementations of the first aspect, the mounting mechanism further comprises an elastic member, the mounting member is movably arranged on the adjusting member and overlaps the adjusting member, the mounting member has a mounting surface configured to arrange the cutter head mechanism, and the elastic member is connected to a side of the mounting member away from the mounting surface; and when the adjusting member moves in a first direction, the adjusting member drives the mounting member to move towards the elastic member, such that the elastic member is elastically deformed; and when the adjusting member moves in a second direction, the elastic member is recovered from elastic deformation, and drives the mounting member to move in the second direction and abut against the adjusting member, wherein the first direction is opposite to the second direction.

With reference to the first aspect, in some implementations of the first aspect, the mounting member is provided with a mounting groove configured to mount and fix the cutter head mechanism.

With reference to the first aspect, in some implementations of the first aspect, an end portion of the adjusting member is provided with a first lug, a side portion of the mounting member is provided with a second lug, and the second lug movably overlaps the first lug in a lifting/lowering direction of the cutter head mechanism.

With reference to the first aspect, in some implementations of the first aspect, the second lug is provided with a limiting groove, and the first lug is movably inserted into the limiting groove.

With reference to the first aspect, in some implementations of the first aspect, the lifting/lowering device further comprises a limiting member, wherein the limiting member is located on one side of the mounting mechanism, and is configured to limit an ultimate displacement of the mounting mechanism moving in a lifting/lowering direction of the cutter head mechanism.

With reference to the first aspect, in some implementations of the first aspect, one end of the elastic member abuts against the limiting member, and the other end of the elastic member abuts against the mounting member.

With reference to the first aspect, in some implementations of the first aspect, at least one of the limiting member and the mounting member is provided with a positioning structure configured to position the elastic member relative to the limiting member and the mounting member.

With reference to the first aspect, in some implementations of the first aspect, the lifting/lowering device further comprises a guide member over which the mounting member and/or the adjusting member is movably fitted, wherein the guide member extends in the first direction and is configured to enable the mounting member and the adjusting member to move back and forth in an extension direction of the guide member.

With reference to the first aspect, in some implementations of the first aspect, the lifting/lowering device further comprises a base, wherein the limiting member is fitted over the guide member, and the mounting member and the adjusting member are movably arranged between the base and the limiting member.

With reference to the first aspect, in some implementations of the first aspect, the driving member, the second transmission member and the guide member are arranged at intervals on the base; and the base is provided with a through hole at a position corresponding to the mounting member, and the through hole is configured to allow the mounting member and the cutter head mechanism to move back and forth in the extension direction of the guide member.

With reference to the first aspect, in some implementations of the first aspect, the lifting/lowering device further comprises an expandable protective cover, wherein two opposite ends of the expandable protective cover are respectively connected to the mounting member and the base, and the expandable protective cover covers the through hole.

In a second aspect, the present application provides a harvester, comprising a lifting/lowering device and a cutter head mechanism, wherein the cutter head mechanism is mounted on the mounting mechanism of the lifting/lowering device, and the cutter head mechanism is configured for harvesting.

In the lifting/lowering device according to the present application, the transmission mechanism comprises the first transmission member and the second transmission member, and the first transmission member is driven by the driving member to drive the second transmission member to rotate. The mounting mechanism is threadedly connected to the second transmission member and drives the cutter head mechanism to move towards or away from the first transmission member when the second transmission member rotates. The measuring mechanism is configured to measure the movement distance of the mounting mechanism, so as to obtain the height of the cutter head mechanism. The lifting/lowering device according to the present application can accurately determine the height of the cutter head mechanism.

### Brief Description of the Drawings

In order to describe the technical solutions in the embodiments of the present application more clearly, the accompanying drawings for illustration in the embodiments are briefly described. Apparently, the accompanying drawings in the following description show merely some embodiments of the present application, and those of ordinary skill in the art would have obtained other drawings from these accompanying drawings without creative efforts.
FIG. 1 is a schematic view of a structure of a harvester according to an implementation of the present application.
FIG. 2 is a schematic view of structures of a lifting/lowering device and a cutter head mechanism according to a first implementation of the present application.
FIG. 3 is a schematic sectional view of the lifting/lowering device and the cutter head mechanism according to the first implementation of the present application from a first perspective.
FIG. 4 is a schematic sectional view of the lifting/lowering device and the cutter head mechanism according to the first implementation of the present application from a second perspective.
FIG. 5 is a schematic view of a structure of the cutter head mechanism according to the first implementation of the present application.
FIG. 6 is a schematic view of a partial structure of a mounting mechanism according to the first implementation of the present application.
FIG. 7 is a schematic top view of the lifting/lowering device according to the first implementation of the present application.
FIG. 8 is a schematic view of a bottom structure of a harvester according to the first implementation of the present application.
FIG. 9 is a schematic view of a structure of a cutter head according to the first implementation of the present application.
FIG. 10 is a schematic view of a structure of a lifting/lowering device and a cutter head mechanism according to a second implementation of the present application.
FIG. 11 is a schematic sectional view of the lifting/lowering device and the cutter head mechanism according to the second implementation of the present application.
FIG. 12 is a schematic view of a partial structure of the lifting/lowering device and the cutter head mechanism according to the second implementation of the present application.
FIG. 13 is a schematic view of a structure of an adjusting member according to the second implementation of the present application.
FIG. 14 is a schematic view of a structure of a mounting member according to the second implementation of the present application from a first perspective.
FIG. 15 is a schematic view of a structure of the mounting member according to the second implementation of the present application from a second perspective.
FIG. 16 is a schematic top view of the lifting/lowering device according to the second implementation of the present application.

Description of reference signs: Harvester - 1000, lifting/lowering device - 1, base - 10, through hole - 101, first bearing - 11, second bearing - 12, driving member - 20, power output shaft - 201, transmission mechanism - 30, first transmission member - 31, first sub-transmission member - 311, second sub-transmission member - 312, second transmission member - 32, mounting mechanism - 40, adjusting member - 41, first mounting through hole - 411, second mounting through hole - 412, mounting groove - 413, first lug 415, nut - 42, mounting member - 44, mounting surface 440, second lug 441, limiting groove 442, elastic member - 45, elastic base - 451, elastic body - 452, measuring mechanism - 50, magnetic body - 51, encoder - 52, guide member - 60, limiting member - 70, positioning structure - 701, expandable protective cover - 80, sensor - 90, controller - 100, cutter head mechanism - 2, cutter head motor -21, cutter head - 22, blade - 221, cutter head support - 222.

### Detailed Description of Embodiments

The technical solutions in the embodiments of the present application will be described clearly and completely below with reference to the accompanying drawings in the embodiments of the present application. Apparently, the described embodiments are only some rather than all of the embodiments of the present application. All other embodiments obtained by those of ordinary skill in the art based on the embodiments of the present application without creative efforts shall fall within the scope of protection of the present application.

The "embodiment" or "implementation" mentioned herein means that a particular feature, structure, or characteristic described with reference to the embodiment or implementation may be included in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

It should be noted that the terms "first", "second", and the like in the description, the claims, and the accompanying drawings of the present application are used to distinguish different objects, rather than to describe a particular order. In addition, the terms "comprise/include" and "have" and any variations thereof are intended to cover a non-exclusive inclusion.

With the increasing variety of harvesters, there are more and more types of lifting/lowering devices in harvesters. A cutter head mechanism is lifted/lowered mainly by a lifting/lowering device. At present, the lifting/lowering device on the market is prone to wear after long-term use, resulting in problems such as looseness or short service life, and it is impossible to accurately determine a height to which the cutter head mechanism is lifted/lowered.

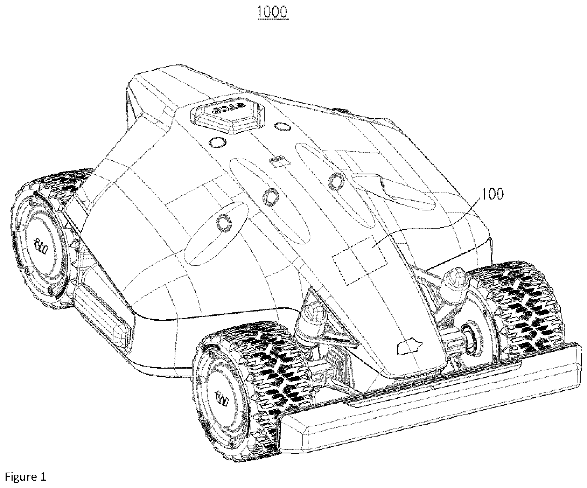

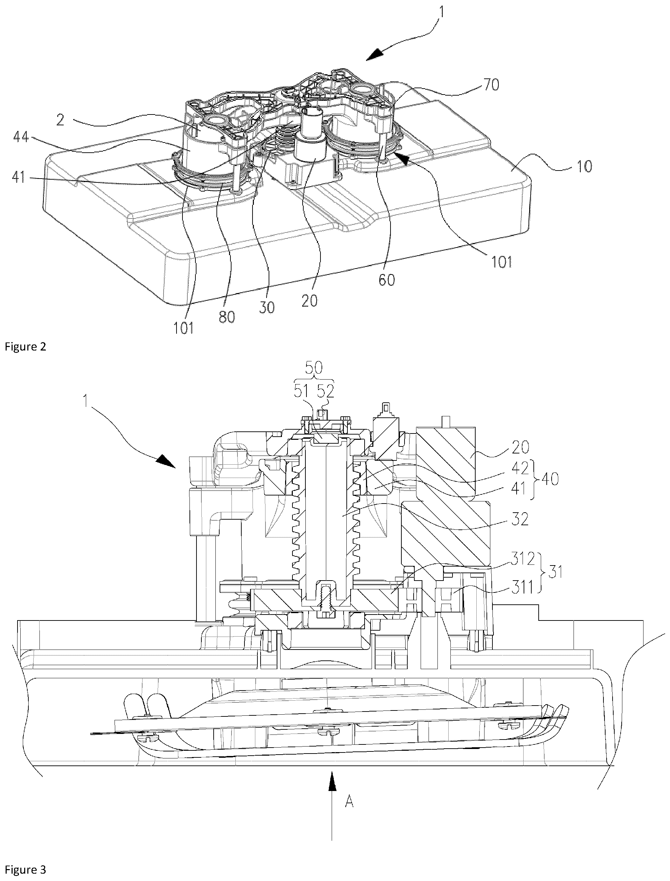

Referring to FIGS. 1 and 2, FIG. 1 is a schematic view of a structure of a harvester 1000 according to an implementation of the present application (for the harvester 1000 mentioned later, reference may be made to FIG. 1), and FIG. 2 is a schematic view of a structure of a lifting/lowering device 1 and a cutter head mechanism 2 according to a first implementation of the present application. The harvester 1000 according to the present application comprises the lifting/lowering device 1 and the cutter head mechanism 2. The cutter head mechanism 2 is mounted on the lifting/lowering device 1, and the cutter head mechanism 2 is configured for harvesting. Optionally, the cutter head mechanism 2 is used for, including but not limited to, cutting grass, and the cutter head mechanism 2 may also be used for harvesting other plants, such as rice and wheat.

Referring to FIGS. 2 and 3, a lifting/lowering device 1 is shown. The lifting/lowering device 1 comprises a driving member 20, a transmission mechanism 30, a mounting mechanism 40, and a measuring mechanism 50. The transmission mechanism 30 is connected to the driving member 20. The transmission mechanism 30 is configured to convert a rotary motion of the driving member 20 into a linear motion. The transmission mechanism 30 comprises a first transmission member 31 and a second transmission member 32. The first transmission member 31 is connected to the second transmission member 32 and the driving member 20 respectively. The first transmission member 31 is driven by the driving member 20 to drive the second transmission member 32 to rotate. The mounting mechanism 40 is arranged spaced apart from the first transmission member 31, and is threadedly connected to the second transmission member 32. The mounting mechanism 40 is configured to mount the cutter head mechanism 2. When the second transmission member 32 rotates, the mounting mechanism 40 moves towards or away from the first transmission member 31 to adjust the height of the cutter head mechanism 2. The measuring mechanism 50 is configured to measure a movement distance of the mounting mechanism 40, so as to obtain the height of the cutter head mechanism 2, to accurately adjust the height of the cutter head mechanism 2.

The cutter head mechanism 2 of the lifting/lowering device 1 according to the present application is mounted on the mounting mechanism 40. When the height of the cutter head mechanism 2 needs to be adjusted, it is only necessary to activate the driving member 20, such that the driving member 20 drives the first transmission member 31 to drive the second transmission member 32 to rotate, and the second transmission member 32 drives the mounting mechanism 40 and the cutter head mechanism 2 mounted on the mounting mechanism 40 to move relative to the first transmission member 31, for example, to move towards the first transmission member 31 or away from the first transmission member 31, so as to adjust a relative positional relationship between the cutter head mechanism 2 and the first transmission member 31 and the driving member 20, thus adjusting the height of the cutter head mechanism 2. Optionally, a rotation direction of the second transmission member 32 may be clockwise or counterclockwise.

The mounting mechanism 40 is connected to the second transmission member 32 by means of threads, and the cutter head mechanism 2 is mounted on the mounting mechanism 40. When the height of the cutter head mechanism 2 needs to be adjusted, the height of the cutter head mechanism 2 can be adjusted only by adjusting a relative positional relationship between the mounting mechanism 40 and the first transmission member 31. The threaded connection enables the mounting mechanism 40 to move smoothly during height adjustment, so that the cutter head mechanism 2 can also move smoothly during height adjustment, and thus the transmission of the lifting/lowering device 1 is more stable. The lifting/lowering device 1 is further provided with a measuring mechanism 50. The measuring mechanism 50 is configured to measure the movement distance of the mounting mechanism 40, so that a specific height of the cutter head mechanism 2 can be calculated based on the movement distance of the mounting mechanism 40. This better facilitates accurate adjustment and control of the height of the cutter head mechanism 2 by an operator, to facilitate the harvester 1000 to trim grass or other plants to a specific height, thereby improving the diversity of operating functions of the harvester 1000.

Taking the mounting of the cutter head mechanism 2 on the mounting mechanism 40 as an example, the height adjustment process of the lifting/lowering device 1 is described below, which should not be understood as a limitation to the lifting/lowering device 1 according to the present application. Where the cutter head mechanism 2 is mounted on the mounting mechanism 40, when it is necessary to raise the height of the cutter head mechanism 2 (i.e., to move the cutter head mechanism 2 towards the first transmission member 31) (as shown by the arrow A in FIG. 3), the driving member 20 is activated, and the first transmission member 31 is driven by the driving member 20 to drive the second transmission member 32 to rotate. Since the mounting mechanism 40 is threadedly connected to the second transmission member 32, when the second transmission member 32 rotates, the mounting mechanism 40 moves away from the first transmission member 31, thus increasing the height of the cutter head mechanism 2.

Optionally, one of the mounting mechanism 40 and the second transmission member 32 has a threaded groove, an inner wall of the threaded groove has a first thread, and the other of the mounting mechanism 40 and the second transmission member 32 has a second thread. The first thread and the second thread match each other such that when the second transmission member 32 rotates relative to the mounting mechanism 40, the mounting mechanism 40 drives the cutter head mechanism 2 to move close to or away from the first transmission member 31. Optionally, in this embodiment, the first thread is an internal thread, the second thread is an external thread, and the first thread is in a threaded fit with the second thread, so that when the second transmission member 32 rotates, the mounting mechanism 40 is driven to move in a direction parallel to a rotation axis of the second transmission member 32. In some embodiments, the first thread may be an external thread, and the second thread may be an internal thread threadedly connected to the external thread.

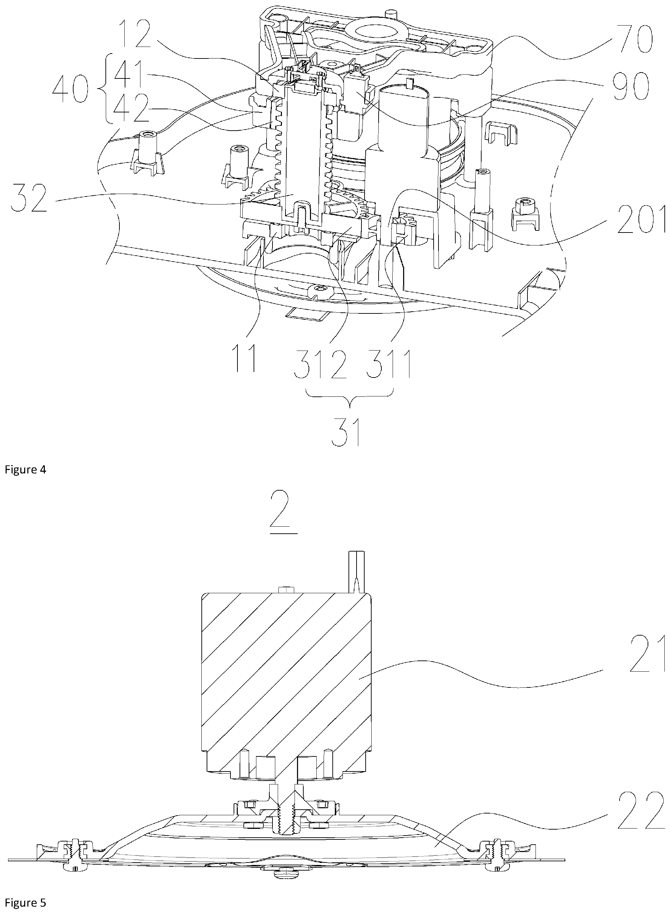

Referring to FIGS. 3 and 4, FIG. 3 is a schematic sectional view of the lifting/lowering device and the cutter head mechanism according to the first implementation of the present application from a first perspective, and FIG. 4 is a schematic sectional view of the lifting/lowering device and the cutter head mechanism according to the first implementation of the present application from a second perspective.

In some embodiments, the driving member 20 may be, but is not limited to, a driving motor. The driving motor comprises a power output shaft 201. When the driving motor is activated, the power output shaft 201 is driven to rotate, thereby implementing power output. In some other embodiments, the driving member 20 may alternatively be a manual driving member. This is not specifically limited in the present application.

It may be noted that, optionally, when the power output shaft 201 of the driving motor rotates clockwise, the driving motor drives the mounting mechanism 40 to move towards the first transmission member 31; and when the power output shaft 201 of the driving motor rotates counterclockwise, the driving motor drives the mounting mechanism 40 to move away from the first transmission member 31.

In some embodiments, the first transmission member 31 comprises a first sub-transmission member 311 and a second sub-transmission member 312 that mesh with each other. The first sub-transmission member 311 is mounted on the power output shaft 201, and the second sub-transmission member 312 is configured to mount the second transmission member 32. When the driving motor is activated, the first sub-transmission member 311 is driven by the power output shaft 201 to rotate, so as to drive the second sub-transmission member 312 and the second transmission member 32 to rotate, thus driving the mounting mechanism 40 to move towards or away from the second sub-transmission member 312.

Specifically, the first sub-transmission member 311 is mounted to the power output shaft 201. It is possible that the first sub-transmission member 311 is fitted over the power output shaft 201, and the first sub-transmission member 311 is relatively fixed to the power output shaft 201. The power output shaft 201 is configured to drive the first sub-transmission member 311 to rotate while rotating.

It may be noted that the specification and dimensions of the driving motor are relatively large, and the second transmission member 32 is arranged in a vertical direction. If the driving motor is directly connected to the second transmission member 32 and drives the second transmission member 32, the driving member 20 needs to be arranged at an upper end or a lower end of the second transmission member 32, which undoubtedly increases the dimension of the lifting/lowering device 1 in the vertical direction, thus increasing the size of the harvester 1000. In the lifting/lowering device 1 and the harvester 1000 according to the present application, the driving member 20 drives the second transmission member 32 to rotate by means of the first sub-transmission member 311 and the second sub-transmission member 312 of the first transmission member 31, and the dimensions of the first sub-transmission member 311 and the second sub-transmission member 312 in the vertical direction are small, so that the driving member 20 does not need to be arranged at the upper end or the lower end of the second transmission member 32, thereby reducing the dimension of the lifting/lowering device 1 in the vertical direction, thus reducing the height and size of the harvester 1000. This better facilitates operation and carrying of the harvester 1000 by the operator, and improves the portability and practicability of the harvester 1000.

Optionally, a transmission mode of the first sub-transmission member 311 and the second sub-transmission member 312 includes, but is not limited to, gear transmission, worm-gear transmission, or other transmission modes, and the first sub-transmission member 311 and the second sub-transmission member 312 each include, but are not limited to, a cylindrical gear, a bevel gear, and a non-circular gear.

Specifically, in an implementation, the first sub-transmission member 311 and the second sub-transmission member 312 are gears. The first sub-transmission member 311 is a first gear, and the first gear is fitted over the power output shaft 201. The second sub-transmission member 312 is a second gear meshing with the first gear. The second transmission member 32 is a lead screw, and the second gear is fitted over the lead screw. The second gear is fixedly connected to the lead screw. Optionally, a mode of fixed connection between the second gear and the lead screw includes, but is not limited to, threaded connection, snap-fit connection, and riveting.

The driving motor drives the first gear to rotate by means of the power output shaft 201, the first gear drives the second gear to rotate, and the second gear drives the lead screw to rotate.

In an implementation, the mounting mechanism 40 has an internal thread, is fitted over the lead screw, and is threadedly connected to the lead screw.

Optionally, in other implementations, the lead screw may be a sliding lead screw, a rolling lead screw (comprising a ball lead screw and a roller lead screw), a hydrostatic lead screw, or other types of lead screws.

When the driving motor is activated, the first gear is driven by the power output shaft 201 to rotate, so as to drive the second gear and the lead screw to rotate coaxially, and further drive the mounting mechanism 40 and the cutter head mechanism 2 to move towards or away from the second gear. The lifting/lowering device 1 adopts a combination of gear transmission and lead screw transmission, so that the movement distance of the cutter head mechanism 2 in the vertical direction can be controlled, thereby controlling the height of the cutter head mechanism 2 in the vertical direction. The transmission structure of the lifting/lowering device 1 according to the present application is more stable, is not prone to wear that will result in looseness of the whole structure, and thus has a longer service life.

The second transmission member 32 is a lead screw. When the mounting mechanism 40 moves to a height, according to a self-locking principle of the lead screw, the mounting mechanism 40 will not fall due to gravity, so that the purpose of fixing the cutter head mechanism 2 on the mounting mechanism 40 to any height can be achieved.

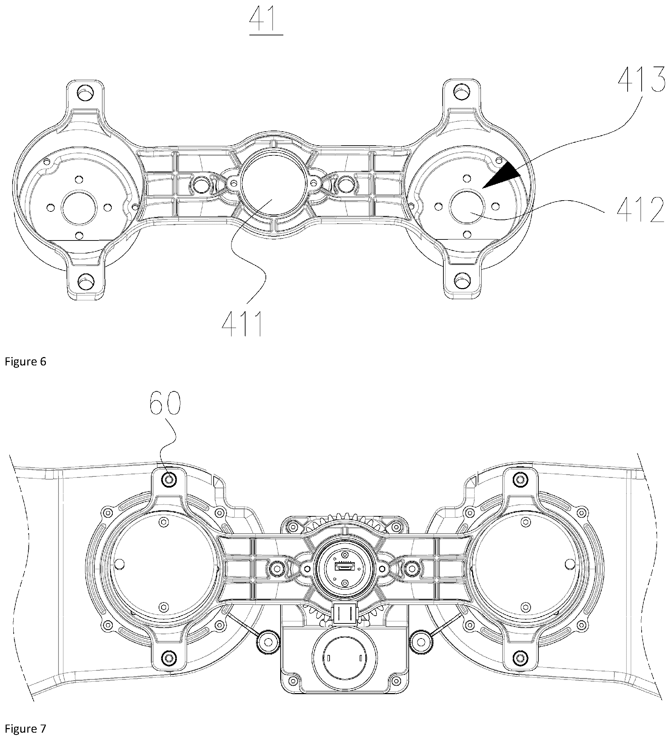

Referring to FIGS. 3 and 4 again, the mounting mechanism 40 comprises an adjusting member 41, a nut 42, and a mounting member 44. The nut 42 is mounted on the adjusting member 41 and is threadedly connected to the second transmission member 32. The mounting member 44 is configured to mount the cutter head mechanism 2, and is arranged on an adjusting frame 43. The adjusting member 41 is fixedly mounted on the nut 42. Referring to FIGS. 5 and 6, FIG. 5 is a schematic view of a structure of the cutter head mechanism according to the first implementation of the present application, and FIG. 6 is a schematic view of a partial structure of a mounting mechanism 40 according to the first implementation of the present application. Referring to FIG. 5, the cutter head mechanism 2 comprises a cutter head motor 21 and a cutter head 22. An output shaft of the cutter head motor 21 is connected to the cutter head 22 and drives the cutter head 22 to rotate.

Referring to FIG. 6, the adjusting member 41 is provided with a first mounting through hole 411, and the nut 42 is fixedly mounted in the first mounting through hole 411 of the adjusting member 41. Optionally, in some embodiments, a mounting mode of the nut 42 and the adjusting member 41 may include, but is not limited to, gluing and snap-fit. In another implementation, the nut 42 and the adjusting member 41 may alternatively be integrally formed with each other. The mounting member 44 is fixedly arranged on the adjusting member 41, so that the mounting member 44 and the adjusting member 41 move synchronously, and thus the mounting member 44 drives the cutter head mechanism 2 to move. For example, in this embodiment, the mounting member 44 and the adjusting member 41 are integrally formed with each other, thereby improving the connection strength and connection reliability between the mounting member 44 and the adjusting member 41 and simplifying the assembly efficiency. In some embodiments, the mounting member 44 and the adjusting member 41 may alternatively be fixedly connected together by means of snap-fit, a locking structure, and the like. In some other embodiments, the mounting member 44 may alternatively be movably arranged on the adjusting member 41.

Specifically, a bottom wall of the mounting member 44 forming the mounting groove 413 is provided with a second mounting through hole 412, and the output shaft of the cutter head motor 21 extends out through the second mounting through hole 412 and is connected to the cutter head 22 located outside the mounting groove 413. The cutter head motor 21 is fixed to a bottom wall of the mounting groove 413. A mode of fixed connection between the cutter head motor 21 and the mounting member 44 includes, but is not limited to, threaded connection and glued connection.

The mounting member 44 is provided with at least one mounting groove 413. Each mounting groove 413 may be configured to mount and fix one cutter head mechanism 2. For example, in this embodiment, the mounting member 44 is provided with two mounting grooves 413. The two mounting grooves 413 may be configured to fix and mount two cutter head mechanisms 2, thereby increasing a harvesting range of the harvester 1000 and improving the operating efficiency of the harvester 1000. It may be understood that a user may mount one or both of the cutter head mechanisms 2 according to actual requirements. Optionally, in some embodiments, one, three, four, five or even more mounting grooves 413 may be provided in the mounting member 44, which is not specifically limited in the present application.

The mounting mechanism 40 comprises one or more mounting members 44. Each mounting member 44 is provided with one mounting groove 413. A plurality of mounting members 44 may be separately arranged on the adjusting member 41, so that the height to which each cutter head mechanism 2 is lifted/lowered is independently adjusted, and a maintenance operation of the cutter head mechanism 2 is facilitated. In some embodiments, a plurality of mounting members 44 may be connected to form an integral structure arranged on the adjusting member 41, thereby improving the assembly efficiency. For example, in this embodiment, the mounting mechanism 40 comprises one adjusting member 41 and two mounting members 44. The two mounting members 44 are respectively arranged at two opposite ends of the adjusting member 41, thereby optimizing the overall structural layout of the harvester 1000, increasing the harvesting range of the harvester 1000 and improving the operating efficiency of the harvester 1000. In some embodiments, the mounting mechanism 40 may alternatively comprise one mounting member 44 or at least three mounting members 44. The number of mounting members 44 is only for illustration, and is not specifically limited in the present application.

Referring to FIGS. 1 and 4, specifically, in an implementation, the lifting/lowering device 1 further comprises a sensor 90 and a controller 100 connected to the sensor 90. The sensor 90 and the controller 100 are both fixedly arranged inside the harvester 1000. In this embodiment, the sensor 90 is arranged close to the mounting mechanism 40. Specifically, the sensor 90 is arranged around the adjusting member 41. The sensor 90 is configured to measure a movement distance of the adjusting member 41, so as to obtain the height of the cutter head mechanism 2. Specifically, the sensor 90 is configured to sense a position of the adjusting member 41 to generate a sensing signal, and the controller 100 is configured to receive the sensing signal sent by the sensor 90 and determine the position of the adjusting member 41 based on the sensing signal.

When the harvester 1000 starts operating, the driving member 20 drives the adjusting member 41 of the mounting mechanism 40 to drive the mounting member 44 to move away from the first transmission member 31 to a position corresponding to the sensor 90. The position includes, but is not limited to, a position where the adjusting member 41 is in contact with the sensor 90 and/or a position where the sensor 90 senses the adjusting member 41.

When the adjusting member 41 moves to the position corresponding to the sensor 90, the height of the cutter head mechanism 2 is a first height. When the adjusting member 41 and the mounting member 44 drive the cutter head mechanism 2 to move close to or away from the first transmission member 31, the controller 100 measures a movement distance of the adjusting member 41 by the sensor 90 and determines the movement distance of the adjusting member 41 as a first distance. It may be understood that since the cutter head mechanism 2 is fixed to the mounting member 44, and the mounting member 44 always abuts against the adjusting member 41, the movement distance of the cutter head mechanism 2 is also the first distance. A height of the cutter head mechanism 2 after movement with the mounting member 44 is a second height, and the second height can be calculated based on the first height and the first distance. For example, the second height may be obtained by subtracting the first distance from the first height.

Optionally, the sensor 90 includes, but is not limited to, a contact sensor, an infrared sensor, a photoelectric sensor, or other types of sensors.

Referring to FIGS. 2 and 3 again, the measuring mechanism 50 is configured to measure the movement distance of the adjusting member 41, so as to obtain the height of the cutter head mechanism 2. A measuring principle for the measuring mechanism 50 is different from that for the sensor 90. Specifically, the measuring mechanism 50 is arranged on the second transmission member 32 and is configured to sense a number of rotations of the second transmission member 32 to generate a rotation number signal, and the controller 100 is configured to receive the rotation number signal sent by the measuring mechanism 50 and determine the position of the adjusting member 41 based on the rotation number signal. In the lifting/lowering device 1 according to the present application, the transmission mechanism 30 comprises the first transmission member 31 and the second transmission member 32, and the first transmission member 31 is driven by the driving member 20 to drive the second transmission member 32 to rotate. The adjusting member 41 is threadedly connected to the second transmission member 32 and drives the mounting member 44 to move when the second transmission member 32 rotates, and the movement of the mounting member 44 drives the cutter head mechanism 2 to move towards or away from the first transmission member 31. The controller 100 measures the movement distance of the adjusting member 41 by the measuring mechanism 50 and/or the sensor 90, so as to obtain the height of the cutter head mechanism 2. The lifting/lowering device 1 according to the present application can accurately determine the height of the cutter head mechanism 2.

Compared with lifting/lowering devices of other existing harvesters, the lifting/lowering device 1 according to the present application has a more stable transmission, and is provided with the measuring mechanism 50 such that the specific height of the cutter head mechanism 2 can be obtained by calculation. This better facilitates accurate adjustment and control of the height of the cutter head mechanism 2 by an operator, to facilitate the harvester 1000 to trim grass or other plants to a specific height, thereby improving the diversity of operating functions of the harvester 1000. In some embodiments, the measuring mechanism 50 and the sensor 90 can operate at the same time, and the controller can calculate the height of the cutter head mechanism 2 based on a preset weight, so as to more accurately determine the height to which the cutter head mechanism 2 is lifted/lowered. In some other embodiments, the measuring mechanism 50 and the sensor 90 can also operate alternately, thus improving the service life.

Referring to FIG. 3 again, the measuring mechanism 50 comprises a magnetic body 51. Optionally, the magnetic body 51 includes, but is not limited to, a radial magnet or other magnetic materials. The magnetic body 51 is arranged on the second transmission member 32. The magnetic body 51 is fixedly connected to the second transmission member 32 and rotates with the second transmission member 32 when the second transmission member 32 rotates. Optionally, a position of the magnetic body 51 includes, but is not limited to, a position arranged coaxially with the second transmission member 32, and the position of the magnetic body 51 includes, but is not limited to, a position arranged at a top end or a bottom end of the second transmission member 32. In some embodiments, the magnetic body 51 may alternatively be arranged on the first transmission member 31. The magnetic body 51 rotates with the second transmission member 32 when the first transmission member 31 rotates. In some other embodiments, the driving member 20 may be configured as a motor with an integrated encoder.

Referring to FIG. 3 again, the measuring mechanism 50 further comprises an encoder 52. The encoder 52 is arranged spaced apart from the magnetic body 51. In an implementation, a distance between the encoder 52 and the magnetic body 51 is 2 mm. Optionally, the distance between the encoder 52 and the magnetic body 51 may be 0 mm to 10 mm, for example, 1 mm, 3 mm, 4 mm, 5 mm, 6 mm, 7 mm, 8 mm, 9 mm, or 10 mm.

The encoder 52 is configured to calculate the movement distance of the adjusting member 41 based on the number of rotations of the magnetic body 51. Optionally, a position of the encoder 52 includes, but is not limited to, a position arranged coaxially with the second transmission member 32 or the magnetic body 51.

Specifically, the encoder 52 comprises a detection chip, which may be configured to detect magnetic field changes. When the magnetic body 51 is a radial magnet, the magnetic body 51 comprises a first end and a second end that are arranged opposite to each other. The first end is an N pole and the second end is an S pole. A magnetic field near the first end is an N-pole magnetic field, and a magnetic field near the second end is an S-pole magnetic field. When the magnetic body 51 rotates with the second transmission member 32, the first end and the second end also rotate, so that a magnetic field near the magnetic body 51 changes.

It may be understood that, the height to which the adjusting member 41 is lifted/lowered (that is, the height to which the cutter head mechanism 2 is lifted/lowered) is equal to the lead of the nut 42 multiplied by the number of rotations of the second transmission member 32. In this embodiment, one encoder 52 may be provided. In this case, when the magnetic body 51 rotates by 180°, that is, when the second transmission member 32 rotates by half a turn, the encoder 52 may count once, so that the encoder 52 can more accurately calculate the height to which the cutter head mechanism 2 is lifted/lowered. Of course, in some embodiments, the encoder 52 may alternatively count once when the second transmission member 32 rotates by one turn, to reduce power consumption of the encoder 52.

In some embodiments, a plurality of encoders 52 may be provided. The encoders 52 are uniformly arranged in a circumferential direction of the magnetic body 51. In this case, when the magnetic body 51 rotates by less than 180°, that is, when the second transmission member 32 rotates by less than half a turn, the encoder 52 may count once, thereby further improving the accuracy of the encoder 52 in calculating the height to which the cutter head mechanism 2 is lifted/lowered. For example, the number of the plurality of encoders 52 is 2, 4, 6, etc., which is not specifically limited in the present application.

The detection chip may be configured to detect a change of the magnetic field caused by the rotation of the magnetic body 51, and then calculate and determine, based on the number of times of changes of the magnetic field, the number of rotations of the magnetic body 51 driven by the second transmission member 32. Since the adjusting member 41 is threadedly connected to the second transmission member 32, when rotating, the second transmission member 32 drives the adjusting member 41 to move close to or away from the first transmission member, and the encoder 52 can calculate and determine the movement distances of the adjusting member 41 and the mounting member 44 based on the number of rotations of the second transmission member 32, thus determining the movement distance of the cutter head mechanism 2.

The measuring mechanism 50 is provided with the encoder 52 and the magnetic body 51 connected to the second transmission member 32. The encoder 52 can determine the number of rotations of the magnetic body 51 and determine the number of rotations of the second transmission member 32, and further determine the movement distance of the cutter head mechanism 2. The movement distances of the adjusting member 41 and the cutter head mechanism 2 can be accurately calculated, so that height information of the cutter head mechanism 2 is obtained, thereby facilitating the harvester 1000 to accurately control the height of the cutter head mechanism 2.

The controller 100 is electrically connected to the encoder 52 and the driving member 20 respectively, and is configured to control activation and deactivation of the encoder 52 and the driving member 20.

Specifically, after the operator inputs, to the harvester 1000, a preset height that the cutter head mechanism 2 needs to reach, the controller 100 first controls the driving member 20 to rotate so as to drive the adjusting member 41 to move towards or away from the first transmission member 31. When the adjusting member 41 moves to the position corresponding to the sensor 90, the controller controls the driving member 20 to stop operating, so as to control the adjusting member 41 to stop moving. The controller compares the input preset height with the first height of the cutter head mechanism 2, and controls, based on a comparison result, the driving member 20 to drive the adjusting member 41 to move towards or away from the first transmission member 31, so as to drive the cutter head mechanism 2 to move towards or away from the first transmission member 31. A second distance by which the cutter head mechanism 2 moves is determined by the measuring mechanism 50, and the controller controls the driving member 20 to stop operating when the second distance is equal to a difference between the preset height and the first height.

For example, in an implementation, when the sensor 90 is located at an end of the second transmission member 32 away from the first transmission member 31, the controller first controls the driving member 20 to drive the adjusting member 41 to move away from the first transmission member 31, and the height of the cutter head mechanism 2 is the first height after the adjusting member 41 moves to the position corresponding to the sensor 90. After the controller 100 recognises that the preset height is less than the first height, the controller controls the driving member 20 to drive the adjusting member 41 to move towards the first transmission member 31, so as to drive the cutter head mechanism 2 to move towards the first transmission member 31. The second distance by which the cutter head mechanism 2 moves is determined by the measuring mechanism 50, and the controller controls the driving member 20 to stop operating when the second distance is equal to the difference between the preset height and the first height.

The controller is configured to control the activation and deactivation of the encoder 52 and the driving member 20, so as to control the height of the adjusting member 41, and further control the heights of the mounting member 44 and the cutter head mechanism 2, thereby providing a basis and premise for the harvester 1000 to accurately control the height of the cutter head mechanism 2.

Referring to FIGS. 2 and 7 again, FIG. 7 is a schematic top view of a lifting/lowering device 1 according to an implementation of the present application. The lifting/lowering device 1 further comprises a base 10 and a guide member 60. The driving member 20, the second transmission member 32 and the guide member 60 are arranged at intervals on the base 10. The guide member 60 is arranged in a vertical direction, and the mounting mechanism 40 is movably fitted over the guide member 60, to enable the mounting mechanism 40 to move in an extension direction of the guide member 60. The guide member 60 is movably connected to the adjusting member 41 and/or the mounting member 44. For example, in this embodiment, a plurality of guide members 60 are provided, at least some of the guide members 60 are movably connected to the adjusting member 41, and the rest of the guide members 60 are movably connected to the mounting member 44. In some embodiments, the guide member 60 is only movably connected to the adjusting member 41; or the guide member 60 is only movably connected to the mounting member 44. The guide member 60 is configured as a columnar structure. The extension direction of the guide member 60 is parallel to a direction in which the mounting member 44 moves towards or away from the first transmission member 31, that is, the extension direction of the guide member 60 is parallel to a lifting/lowering direction of the cutter head mechanism 2.

One or more guide members 60 may be provided. In an implementation, four guide members 60 are provided. The four guide members 60 are movably connected to the mounting members 44. Specifically, two guide members 60 are movably connected to a corresponding mounting member 44 and are symmetrically distributed about a central axis of the mounting member 44, thereby improving the stability and reliability of lifting/lowering of the cutter head mechanism 2. In another implementation, six guide members 60 are provided, in which four of the guide members 60 are movably connected to the mounting member 44 and the other two are movably connected to the adjusting member 41, thereby further improving the stability and reliability of the lifting/lowering of the cutter head mechanism 2. Optionally, the number of guide members 60 may alternatively be 1, 2, 3, 5, 8, etc., which is not specifically limited in the present application.

The base 10 is provided with a through hole 101 at a position corresponding to the cutter head mechanism 2, and the through hole 101 is configured to allow the mounting member 44 and the cutter head mechanism 2 to extend out of a side of the base 10 away from the mounting mechanism 40. Specifically, the through hole 101 is configured to allow the mounting member 44 to extend out of the base 10, that is, the mounting member 44 is configured to drive the cutter head 22 and at least part of the cutter head motor 21 to extend out of the base 10.

The lifting/lowering device 1 further comprises a limiting member 70. The limiting member 70 is located on one side of the mounting mechanism 40, and the limiting member 70 is configured to limit an ultimate displacement of the mounting mechanism 40 moving in a lifting/lowering direction of the cutter head mechanism 2. In this embodiment, the limiting member 70 is fitted over the guide member 60, and the limiting member 70 is located on a side of the mounting mechanism 40 away from the base 10. The limiting member 70 is configured to limit a displacement of the mounting mechanism 40 moving in the extension direction of the guide member 60. In some embodiments, the limiting member 70 may alternatively be arranged on another element of the harvester 1000, such as a housing. In this embodiment, the mounting member 44 and the adjusting member 41 are movably arranged between the base 10 and the limiting member 70, so as to limit the range of the height to which the cutter head mechanism 2 is lifted/lowered and effectively prevent the cutter head mechanism 2 from damaging other structures of the harvester 1000 during height adjustment.

In an implementation, the sensor 90 is fixed to the limiting member 70. In some other embodiments, the sensor 90 may alternatively be fixed to a side of the adjusting member 41 facing the limiting member 70 or to another element of the harvester 1000.

Two ends of the guide member 60 are respectively fixedly connected to the base 10 and the limiting member 70, and a mode of fixed connection between the guide member 60 and the base 10 and the limiting member 70 includes, but is not limited to, threaded connection. In an operating state of the harvester 1000, when hitting a hard object such as a stone, the cutter head mechanism 2 is subjected to an external force and provides a first force to the mounting mechanism 40. The guide member 60 may be configured to abut against the mounting mechanism 40 and provide a second force to prevent the mounting mechanism from being displaced when the mounting mechanism is subjected to the first force. When the harvester 1000 is in the operating state, the guide member 60 can prevent a part inside the harvester 1000 from being displaced when the cutter head mechanism 2 is subjected to an external force, thus improving the stability of the internal structure of the harvester 1000.

Referring to FIGS. 3 and 4 again, the lifting/lowering device 1 further comprises a first bearing 11 and a second bearing 12. The first bearing 11 is mounted on the base 10, and the second bearing 12 is arranged on the limiting member 70. The second transmission member 32 has two opposite ends respectively inserted in the first bearing 11 and the second bearing 12 and can rotate relative to the first bearing 11 and the second bearing 12.

After the first bearing 11 and the second bearing 12 are connected to the second transmission member 32, friction against the rotation of the second transmission member 32 in the first bearing 11 and the second bearing 12 is small, so that the rotation of the second transmission member 32 is smoother, facilitating normal operation of the lifting/lowering device 1.

Referring to FIG. 2 again, the lifting/lowering device 1 further comprises an expandable protective cover 80. Two opposite ends of the expandable protective cover 80 are respectively connected to the mounting member 44 and the base 10, and the expandable protective cover covers the through hole 101. In other words, the expandable protective cover 80 is arranged corresponding to the position of the through hole 101, that is, an orthogonal projection of the protective cover on the base 10 covers the through hole 101.

The expandable protective cover 80 has two ends respectively fixed to a bottom end of the mounting member 44 and the base 10 and can move with the mounting member 44 and the cutter head mechanism 2 to expand and contract, thus protecting the interior of the harvester 1000 from dust and water.

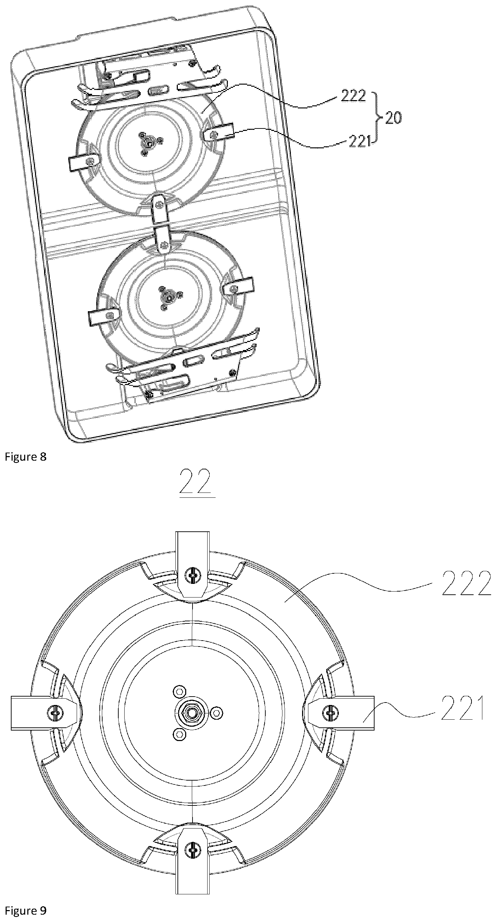

Referring to FIGS. 2, 8 and 9, FIG. 8 is a schematic view of a bottom structure of a harvester according to an implementation of the present application, and FIG. 9 is a schematic view of a structure of a cutter head according to an implementation of the present application. The cutter head 22 further comprises at least one blade 221 and a cutter head support 222. The blade 221 is arranged on an outer periphery of the cutter head support 222 on a side facing away from the mounting mechanism 40, and at least partially exposes the outer periphery of the cutter head support 222.

Each blade 221 is rotatably connected to the cutter head support 222, and the blades 221 are radially arranged under the action of centrifugal force when the cutter head support 222 rotates. When the blade 221 touches an external object with high hardness such as a stone during operation, since the blade 221 is rotatably connected to the cutter head support 222, the blade 221 can rotate, to prevent the blade 221 from being greatly damaged.

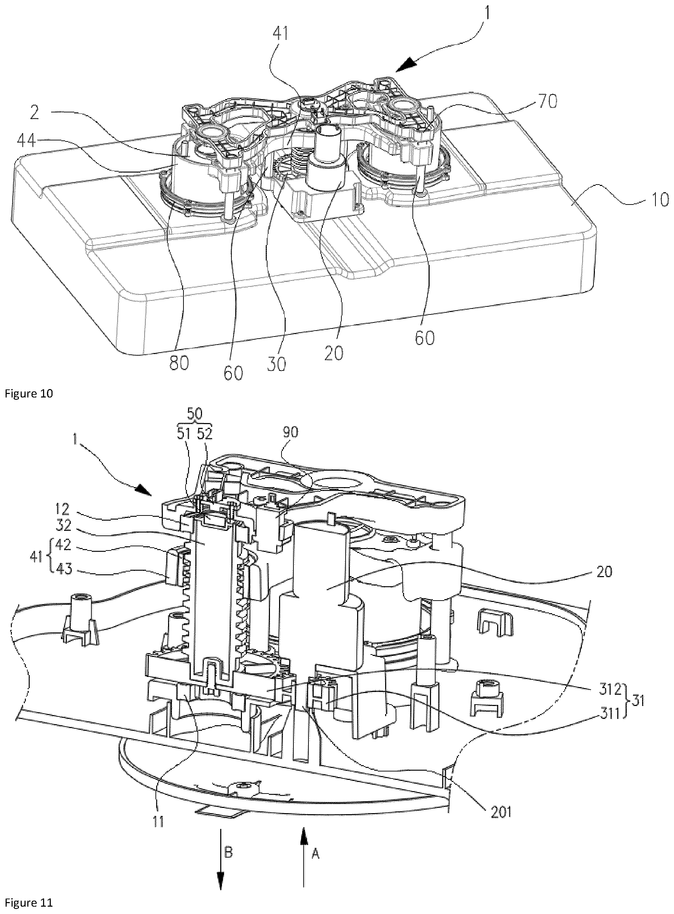

Referring to FIGS. 10 to 12, FIG. 10 is a schematic sectional view of a lifting/lowering device and a cutter head mechanism according to a second implementation of the present application. FIG. 11 is a schematic view of a partial structure of the lifting/lowering device and the cutter head mechanism 2 according to the second implementation of the present application. In the second embodiment, the lifting/lowering device 1 comprises a driving member 20, a transmission mechanism 30, and a mounting mechanism 40. The transmission mechanism 30 is connected to the driving member 20 and is configured to convert a rotary motion of the driving member 20 into a linear motion. It should be noted that the structures of the driving member 20 and the transmission mechanism 30 in the second implementation are the same as those in the first implementation, and are not repeated herein. The structure of the mounting mechanism 40 in the second implementation is similar to the structure of the mounting mechanism 40 in the first implementation. The difference is that the mounting mechanism 40 further comprises an elastic member 45, and the mounting member 44 is movably arranged on the adjusting member 41 and overlaps the adjusting member 41.

The adjusting member 41 is connected to the transmission mechanism 30, and is configured to move under the driving of the transmission mechanism 30. The mounting member 44 has a mounting surface 440. The mounting surface 440 is configured to arrange the cutter head mechanism 2. The elastic member 45 is connected to a side of the mounting member 44 away from the mounting surface 440. When the adjusting member 41 moves in a first direction (as shown by arrow A in FIG. 11), the adjusting member 41 drives the mounting member 44 to move towards the elastic member 45, such that the elastic member 45 is elastically deformed. When the adjusting member 41 moves in a second direction (as shown by arrow B in FIG. 11), the elastic member 45 is recovered from elastic deformation, and drives the mounting member 44 to move in the second direction and abut against the adjusting member 41, thereby adjusting the height of the cutter head mechanism 2. The first direction is opposite to the second direction.

Existing cutter head mechanisms and lifting/lowering devices are mostly rigidly connected to each other, so how to prevent the cutter head mechanism from being damaged by external force becomes a technical problem to be solved. The cutter head mechanism 2 of the lifting/lowering device 1 according to the present application is mounted on the mounting member 44. When the cutter head mechanism 2 is subjected to an external force (for example, when the cutter head mechanism 2 touches an object with high hardness such as a stone during operation), the cutter head mechanism 2 pushes the mounting member 44 to move towards the elastic member 45, and the elastic member 45 is elastically deformed to buffer the external force received by the cutter head mechanism 2. When the cutter head mechanism 2 is subjected to no external force, the elastic member 45 is recovered from the elastic deformation, and the elastic member 45 drives the mounting member 44 and the cutter head mechanism 2 to move in the second direction, so that the cutter head mechanism 2 returns to an initial operating position.

The mounting member 44 is movably arranged on the adjusting member 41, and the elastic member 45 is arranged on the mounting member 44. The elastic member 45 can be elastically deformed when the cutter head mechanism 2 is subjected to an external force, to offset the external force. Compared with that in the prior art, a cutter head mechanism and a lifting/lowering device in a harvester are mostly rigidly connected to each other, a connection relationship between the lifting/lowering device 1 and the cutter head mechanism 2 in the present application can effectively prevent the cutter head mechanism 2 from being damaged when the cutter head mechanism is subjected to an external force, thereby prolonging the service life of the cutter head mechanism 2. Referring to FIG. 11, the adjusting member 41 is arranged spaced apart from the first transmission member 31, and is threadedly connected to the second transmission member 32. The mounting member 44 is configured to mount the cutter head mechanism 2, and the mounting member 44 abuts against the adjusting member 41. When the second transmission member 32 rotates, the adjusting member 41 moves towards or away from the first transmission member 31 to drive the mounting member 44 to move, so as to adjust the height of the cutter head mechanism 2.

The cutter head mechanism 2 of the lifting/lowering device 1 according to the present application is mounted on the mounting member 44, and the mounting member 44 abuts against the adjusting member 41. When the height of the cutter head mechanism 2 needs to be adjusted (for example, the cutter head mechanism 2 needs to be raised or lowered, in other words, the cutter head mechanism 2 moves in the first direction or in the second direction), it is only necessary to activate the driving member 20, such that the driving member 20 drives the first transmission member 31 to drive the second transmission member 32 to rotate, and the second transmission member 32 drives the adjusting member 41, the mounting member 44, and the cutter head mechanism 2 mounted on the mounting member 44 to move relative to the first transmission member 31, for example, to move towards the first transmission member 31 or away from the first transmission member 31, so as to adjust a relative positional relationship between the cutter head mechanism 2 and the first transmission member 31 and the driving member 20, thus adjusting the height of the cutter head mechanism 2. Optionally, a rotation direction of the second transmission member 32 may be clockwise or counterclockwise.

The adjusting member 41 is connected to the second transmission member 32 via threads, and the cutter head mechanism 2 is mounted on the mounting member 44. The mounting member 44 abuts against the adjusting member 41. When the height of the cutter head mechanism 2 needs to be adjusted, the height of the cutter head mechanism 2 can be adjusted only by adjusting a relative positional relationship between the adjusting member 41 and the first transmission member 31. The threaded connection enables the adjusting member 41 to move smoothly during height adjustment, so that the cutter head mechanism 2 can also move smoothly during height adjustment, and thus the transmission of the lifting/lowering device 1 is more stable.

Optionally, one of the adjusting member 41 and the second transmission member 32 has a threaded groove, an inner wall of the threaded groove has a first thread, and the other of the adjusting member 41 and the second transmission member 32 has a second thread. The first thread and the second thread match each other such that when the second transmission member 32 rotates relative to the adjusting member 41, the adjusting member 41 drives the cutter head mechanism 2 to move close to or away from the first transmission member 31. Optionally, the first thread is an internal thread, the second thread is an external thread, and the first thread is in a threaded fit with the second thread, so that when the second transmission member 32 rotates, the adjusting member 41 is driven to move in a direction parallel to a rotation axis of the second transmission member 32.

It may be noted that, optionally, when the power output shaft 201 of the driving motor rotates clockwise, the driving motor drives the mounting member 44 to move towards the first transmission member 31; and when the power output shaft 201 of the driving motor rotates counterclockwise, the driving motor drives the mounting member 44 to move away from the first transmission member 31.

In some embodiments, the first transmission member 31 comprises a first sub-transmission member 311 and a second sub-transmission member 312 that mesh with each other. The first sub-transmission member 311 is mounted on the power output shaft 201, and the second sub-transmission member 312 is configured to mount the second transmission member 32. When the driving motor is activated, the first sub-transmission member 311 is driven by the power output shaft 201 to rotate, so as to drive the second sub-transmission member 312 and the second transmission member 32 to rotate, thus driving the mounting member 44 to move towards or away from the second sub-transmission member 312.

In an implementation, the adjusting member 41 has an internal thread, is fitted over the lead screw, and is threadedly connected to the lead screw.

When the driving motor is activated, the first gear is driven by the power output shaft 201 to rotate, so as to drive the second gear and the lead screw to rotate coaxially, and further drive the mounting member 44 and the cutter head mechanism 2 to move towards or away from the second gear. The lifting/lowering device 1 adopts a combination of gear transmission and lead screw transmission, so that the movement distance of the cutter head mechanism 2 in the vertical direction can be controlled, thereby controlling the height of the cutter head mechanism 2 in the vertical direction. The transmission structure of the lifting/lowering device 1 according to the present application is more stable, is not prone to wear that will result in looseness of the whole structure, and thus has a longer service life.

The second transmission member 32 is a lead screw. When the adjusting member 41 moves to a height, according to a self-locking principle of the lead screw, the adjusting member 41 will not fall due to gravity, and the mounting member 44 is positioned above the adjusting member 41, so that the purpose of fixing the cutter head mechanism 2 on the mounting member 44 to any height can be achieved.

Referring to FIG. 11 again, the adjusting member 41 comprises an adjusting frame 43 and a nut 42. The nut 42 is mounted on the adjusting frame 43, and the mounting member 44 is configured to mount the cutter head mechanism 2. The mounting member 44 is movably arranged on the adjusting frame 43.

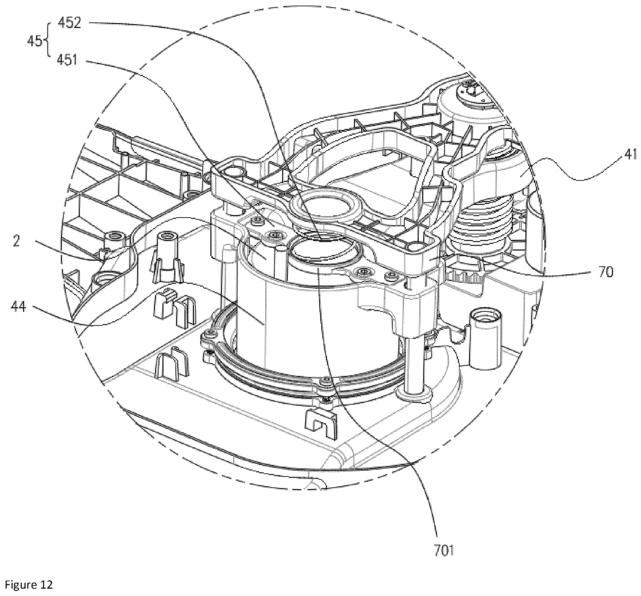

Referring to FIG. 12 again, in an implementation, the elastic member 45 may comprise an elastic base 451 and an elastic body 452 that are connected to each other. The elastic body 452 is arranged on the elastic base 451. The elastic base 451 is arranged on the mounting member 44 and is fixedly connected to the mounting member 44. In some embodiments, the elastic body 452 may directly abut against the mounting member 44 and/or the cutter head mechanism 2.

Optionally, the elastic member 45 and the elastic body 452 each may be, but are not limited to, a spring, an elastic sleeve (such as a silicone sleeve and a rubber sleeve), an elastic block, or other components that can be elastically deformed.

Referring to FIGS. 10, 11 and 12 again, the lifting/lowering device 1 further comprises a measuring mechanism 50. The measuring mechanism 50 is configured to measure movement distances of the adjusting member 41 and the mounting member 44, so as to obtain the height of the cutter head mechanism 2.

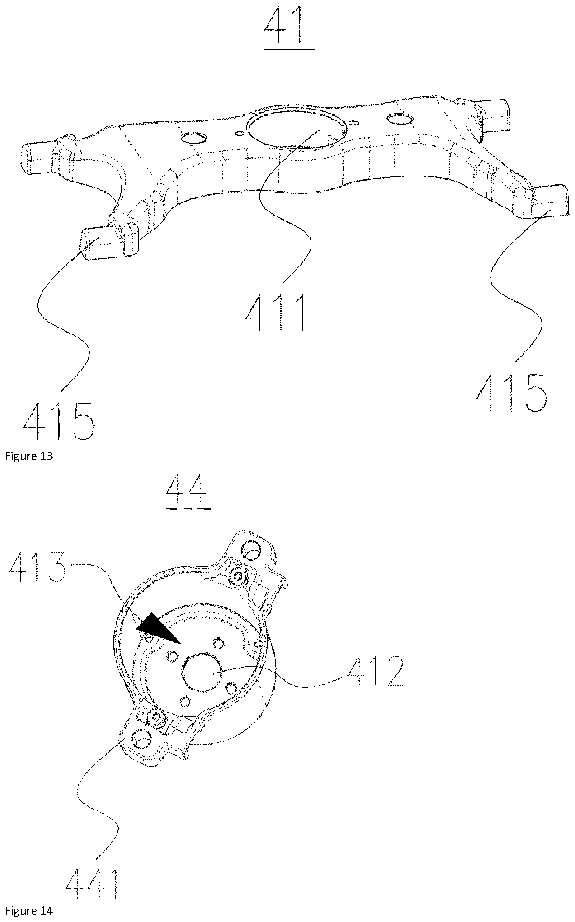

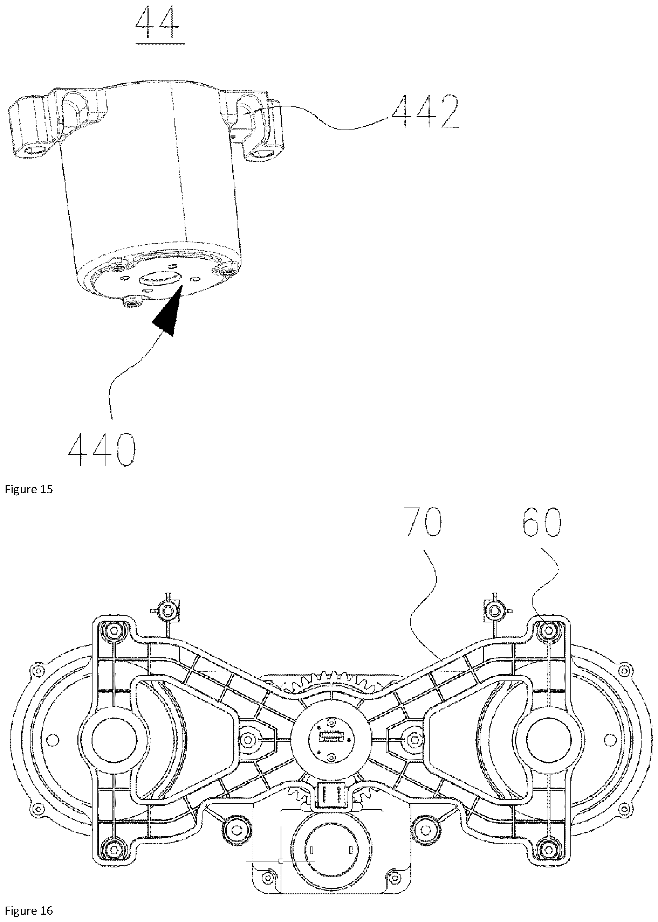

Referring to FIGS. 13, 14 and 15, FIG. 13 is a schematic view of a structure of an adjusting member 41 according to the second implementation of the present application, FIG. 14 is a schematic view of a structure of a mounting member 44 according to the second implementation of the present application from a first perspective, and FIG. 15 is a schematic view of a structure of the mounting member 44 according to the second implementation of the present application from a second perspective. The adjusting member 41 is provided with a first mounting through hole 411, and the nut 42 is fixedly mounted in the first mounting through hole 411 of the adjusting member 41. Optionally, a mounting mode of the nut 42 and the adjusting member 41 includes, but is not limited to, gluing. In another implementation, the nut 42 and the adjusting member 41 may alternatively be integrally formed with each other. The mounting member 44 is provided with at least one mounting groove 413. The mounting groove 413 is configured to mount and fix the cutter head mechanism 2. Specifically, a bottom wall of the mounting member 44 forming the mounting groove 413 is provided with a second mounting through hole 412, and the output shaft of the cutter head motor 21 extends out through the second mounting through hole 412 and is connected to the cutter head 22 located outside the mounting groove 413. The cutter head motor 21 is fixed to a bottom wall of the mounting groove 413. A mode of fixed connection between the cutter head motor 21 and the mounting member 44 includes, but is not limited to, threaded connection and glued connection.

An end portion of the adjusting member 41 is provided with a first lug 415. A side portion of the mounting member 44 is provided with a second lug 441. The second lug 441 movably overlaps the first lug 415 in a lifting/lowering direction of the cutter head mechanism 2. It may be understood that, when the adjusting member 41 moves upwards in the first direction, the adjusting member 41 pushes against the mounting member 44 to also move same upwards in the first direction. In this case, the elastic member 45 is deformed, so as to raise the height of the cutter head mechanism 2. When the adjusting member 41 descends in the second direction, the elastic member 45 is gradually recovered from deformation, and an elastic force of the elastic member 45 pushes against the mounting member 44 to also descend same in the second direction, so as to lower the height of the cutter head mechanism 2.

The number of first lugs 415 and the number of second lugs 441 each may be one or more, for example, three, four or six, which is not specifically limited in the present application. For example, in this embodiment, four first lugs 415 are arranged on the adjusting member 41. Two opposite second lugs 441 are arranged at side portions of the top of each mounting member 44, thereby facilitating mounting of the adjusting member 41, and ensuring that the mounting member 44 is uniformly stressed as a whole, thus ensuring the stability and reliability of the lifting/lowering of the cutter head mechanism 2.

Optionally, in some implementations of the first aspect, the second lug 441 is provided with a limiting groove 442, and the first lug 415 is movably inserted into the limiting groove 442. When the cutter head mechanism 2 is subjected to no external force, the first lug 415 is accommodated in the limiting groove 442, that is, the first lug 415 engages with the limiting groove 442, so that it is ensured that the adjusting member 41 can drive the mounting member 44 to perform lifting/lowering movement stably. When the cutter head mechanism 2 is subjected to an external force, an elastic force of the elastic member 45 is less than the external force, such that the first lug 415 can be disengaged from the limiting groove 442, or even extend out of the limiting groove 442, thereby effectively preventing the cutter head mechanism 2 from being damaged when the cutter head mechanism is subjected to the external force, and prolonging the service life of the cutter head mechanism 2. It may be understood that when the external force on the cutter head mechanism 2 is removed, the elastic force of the elastic member 45 pushes against the mounting member 44, so that the mounting member 44 overlaps the adjusting member 41 again, so as to adjust the height of the cutter head mechanism 2 next time more quickly, and improve user experience.

In some embodiments, a groove wall of the limiting groove 442 and an outer wall of the first lug 415 are of a smooth transition structure, so as to solve the problem of rubbing and damage between the adjusting member 41 and the mounting member 44. In some embodiments, a sound absorbing structure is provided on the limiting groove 442 and/or the first lug 415, thereby reducing noise, so as to further improve the user experience.

Referring to FIGS. 12 and 16 together, in some implementations of the first aspect, the lifting/lowering device 1 further comprises a limiting member 70. The base 10 is arranged spaced apart from the limiting member 70, and an accommodation space is enclosed between the base 10 and the limiting member 70. The accommodation space is used to arrange the driving member 20, a transmission mechanism 30, an adjusting assembly, and a guide member 60. The base 10 is configured to mount the driving member 20, the transmission mechanism 30 and the guide member 60, and the limiting member 70 is fitted over an end of the guide member 60 away from the base 10, and is connected to an end of the elastic member 45 away from the mounting member 44. The limiting member 70 is configured to limit movement distances of the adjusting member 41 and the mounting member 44 in the first direction.

The base 10 is provided with a through hole at a position corresponding to the cutter head mechanism 2, and the through hole is configured to allow the cutter head mechanism 2 to extend out of a side of the base 10 away from the mounting member 44. Specifically, the through hole is configured to allow the mounting member 44 to extend out of a side of the base 10 away from the elastic member 45, and the mounting member 44 is configured to drive the cutter head 22 and at least part of the cutter head motor 21 to extend out of the side of the base 10 away from the mounting member 44.

Two ends of the guide member 60 are respectively fixedly connected to the base 10 and the limiting member 70, and a mode of fixed connection between the guide member 60 and the base 10 and the limiting member 70 includes, but is not limited to, threaded connection.

The limiting member 70 is located on one side of the mounting member 44, and the limiting member 70 is configured to limit an ultimate displacement of the mounting member 44 moving in a lifting/lowering direction of the cutter head mechanism 2. In some other embodiments, the limiting member 70 is further configured to limit an ultimate displacement of the adjusting member 41 moving in the lifting/lowering direction of the cutter head mechanism 2.

Referring to FIG. 12 again, in some implementations of the first aspect, one end of the elastic member 45 abuts against the limiting member 70, and the other end of the elastic member 45 abuts against the mounting member 44. Optionally, in some embodiments, the elastic member 45 is elastically connected to the limiting member 70 and/or the mounting member 44, so as to prevent a displacement of the elastic member 45 and ensure that the elastic member 45 can better provide a buffering force for the lifting/lowering of the cutter head mechanism 2. For example, in this embodiment, a positioning structure 701 is provided on the elastic member 45 and/or the limiting member 70. The positioning structure 701 is configured to position the elastic member 45 relative to the elastic member 45 and/or the limiting member 70. In some other embodiments, the elastic member 45 may alternatively abut between the limiting member 70 and the mounting member 44, thus improving the assembly efficiency of the elastic member 45.

The above describes some implementations of the present application, and it should be noted that for those of ordinary skill in the art, several improvements and modifications can also be made without departing from the principle of the present application, and these improvements and modifications are also considered to be within the scope of protection of the present application.

## Claims

1. A lifting/lowering device, **characterized by** comprising:
a driving member;
a transmission mechanism, comprising a first transmission member and a second transmission member, wherein the first transmission member is connected to the second transmission member and the driving member respectively, and the first transmission member is driven by the driving member to drive the second transmission member to rotate;
a mounting mechanism threadedly connected to the second transmission member, wherein the mounting mechanism is configured to mount a cutter head mechanism, and when the second transmission member rotates, the mounting mechanism moves towards or away from the first transmission member; and
a measuring mechanism configured to measure a movement distance of the mounting mechanism, so as to obtain a height of the cutter head mechanism.

2. The lifting/lowering device according to claim 1, **characterized in that** the measuring mechanism further comprises an encoder and a magnetic body, wherein the magnetic body is arranged on the second transmission member and rotates together with the second transmission member when the second transmission member rotates, and the encoder is configured to calculate the movement distance of the mounting mechanism based on a number of rotations of the magnetic body.

3. The lifting/lowering device according to claim 2, **characterized by** further comprising a controller electrically connected to the encoder and the driving member respectively and configured to control activation and deactivation of the encoder and the driving member.

4. The lifting/lowering device according to claim 1, **characterized in that** the driving member is a driving motor comprising a power output shaft, and the first transmission member comprises a first sub-transmission member and a second sub-transmission member that mesh with each other; the first sub-transmission member is mounted on the power output shaft, and the second sub-transmission member is configured to mount the second transmission member; and when the driving motor is activated, the first sub-transmission member is driven by the power output shaft to rotate, the first sub-transmission member drives the second sub-transmission member to rotate, the second sub-transmission member drives the second transmission member to rotate, and the second transmission member drives the mounting mechanism to move towards or away from the second sub-transmission member.

5. The lifting/lowering device according to claim 4, **characterized in that** the first sub-transmission member is a first gear fitted over the power output shaft, the second sub-transmission member is a second gear, the second transmission member is a lead screw on which the second gear is sleeved, and the mounting mechanism has an internal thread, is fitted over the lead screw and is threadedly connected to the lead screw; and when the driving motor is activated, the first gear is driven by the power output shaft to rotate, the first gear drives the second gear to rotate, the second gear drives the lead screw to rotate coaxially, and the lead screw drives the mounting mechanism to move towards or away from the second gear.

6. The lifting/lowering device according to claim 1, **characterized in that** the mounting mechanism comprises an adjusting member, a nut, and a mounting member, wherein the nut is mounted on the adjusting member and is threadedly connected to the second transmission member, and the mounting member is configured to mount the cutter head mechanism and is arranged on the adjusting member.

7. The lifting/lowering device according to claim 6, **characterized in that** the measuring mechanism is configured to measure a movement distance of the adjusting member.

8. The lifting/lowering device according to claim 6, **characterized in that** the mounting member is fixedly arranged on the adjusting member.

9. The lifting/lowering device according to claim 6, **characterized in that** the mounting mechanism further comprises an elastic member, the mounting member is movably arranged on the adjusting member and overlaps the adjusting member, the mounting member has a mounting surface configured to arrange the cutter head mechanism, and the elastic member is connected to a side of the mounting member away from the mounting surface; and when the adjusting member moves in a first direction, the adjusting member drives the mounting member to move towards the elastic member, such that the elastic member is elastically deformed; and when the adjusting member moves in a second direction, the elastic member is recovered from elastic deformation, and drives the mounting member to move in the second direction and abut against the adjusting member, wherein the first direction is opposite to the second direction.

10. The lifting/lowering device according to claim 8, **characterized in that** the mounting member is provided with a mounting groove configured to mount and fix the cutter head mechanism.

11. The lifting/lowering device according to claim 8, **characterized in that** an end portion of the adjusting member is provided with a first lug, a side portion of the mounting member is provided with a second lug, and the second lug movably overlaps the first lug in a lifting/lowering direction of the cutter head mechanism.

12. The lifting/lowering device according to claim 11, **characterized in that** the second lug is provided with a limiting groove, and the first lug is movably inserted into the limiting groove.

13. The lifting/lowering device according to claim 9, **characterized by** further comprising a limiting member, wherein the limiting member is located on one side of the mounting mechanism, and is configured to limit an ultimate displacement of the mounting mechanism moving in a lifting/lowering direction of the cutter head mechanism.

14. The lifting/lowering device according to claim 13, **characterized in that** one end of the elastic member abuts against the limiting member, and the other end of the elastic member abuts against the mounting member.

15. The lifting/lowering device according to claim 13, **characterized in that** at least one of the limiting member and the mounting member is provided with a positioning structure configured to position the elastic member relative to the limiting member and the mounting member.

16. The lifting/lowering device according to claim 13, **characterized by** further comprising a guide member over which the mounting member and/or the adjusting member is movably fitted, wherein the guide member extends in the first direction and is configured to enable the mounting member and the adjusting member to move back and forth in an extension direction of the guide member.

17. The lifting/lowering device according to claim 16, **characterized by** further comprising a base, wherein the limiting member is fitted over the guide member, and the mounting member and the adjusting member are movably arranged between the base and the limiting member.

18. The lifting/lowering device according to claim 17, **characterized in that** the driving member, the second transmission member and the guide member are arranged at intervals on the base; and the base is provided with a through hole at a position corresponding to the mounting member, and the through hole is configured to allow the mounting member and the cutter head mechanism to move back and forth in the extension direction of the guide member.

19. The lifting/lowering device according to claim 18, **characterized by** further comprising an expandable protective cover, wherein two opposite ends of the expandable protective cover are respectively connected to the mounting member and the base, and the expandable protective cover covers the through hole.

20. A harvester, **characterized by** comprising:
a lifting/lowering device according to any one of claims 1-19; and
a cutter head mechanism mounted on the mounting mechanism of the lifting/lowering device and configured for harvesting.
